# EUROPÄISCHE PATENTSCHRIFT

(11) **EP 0 816 870 B1**
(45) Veröffentlichungstag und Bekanntmachung des Hinweises auf die Patenterteilung: **01.03.2006**
(21) Anmeldenummer: 97107471.1
(22) Anmeldetag: 06.05.1997
(51) Int. Cl.: G01V 3/10, G01V 3/15

(54) **Metalldetektor und Verfahren zum Betrieb eines Metalldetektors**
Metal detector and process for operating a metal detector
Détecteur de métal et procédé de fonctionnement d'un détecteur de métal

(30) Priorität: 01.07.1996 DE 19626363
(43) Veröffentlichungstag der Anmeldung: 07.01.1998
(73) Patentinhaber: FIRMA ING. KLAUS EBINGER, D-51149 Köln (DE)
(72) Erfinder: Günnewig, Augustinus, 50733 Köln (DE); Ebinger, Klaus, 51143 Köln (DE); Buscher, Andre, 51149 Köln (DE)
(74) Vertreter: Heim, Hans-Karl

(56) Entgegenhaltungen:
- US-A- 4 024 468
- US-A- 4 263 553
- US-A- 5 079 502

## Beschreibung

Die Erfindung betrifft ein Verfahren zum Betrieb eines Metalldetektors, bei dem von einem Oszillator sinusförmige Wechselfelder erzeugt und ausgestrahlt werden, und eine das Schwingungsverhalten des Oszillators beeinflussende Wirkung von Metallen zur Detektion ausgewertet wird. Weiterhin betrifft die Erfindung einen Metalldetektor mit einem Oszillator, der sinusförmig schwingt.

Bekannt sind Metalldetektoren mit sinusförmigem Schwingungsverhalten und Metalldetektoren mit pulsförmigem Schwingungsverhalten. Die Metalldetektoren mit sinusförmigem Schwingungsverhalten arbeiten mit kontinuierlichen Wechselfeldern unterschiedlicher Arbeitsfrequenz. Durch eine Sende- oder Oszillatorspule fließt dabei ein Strom, der sich zeitlich nach der Sinusfunktion ändert. Metallteile, die im Bereich dieses Wechselfeldes liegen, erzeugen durch Wirbelstromeffekte ein Sekundärfeld, welches vom Metalldetektor wieder aufgenommen und zur Anzeige gebracht wird.

Solche Metalldetektoren arbeiten oft nach dem Dämpfungsprinzip, bei dem ausgenutzt wird, daß Metallgegenstände einen stark dämpfenden Effekt auf die Schwingungsamplitude des Senders ausüben. Ein solcher nach dem Dämpfungsprinzip arbeitender Metalldetektor ist aus der DE 25 49 329 C2 bekannt. Andere Metalldetektoren sind aus US-A-4,263,553 bekannt.

Da bei einem Metalldetektor mit einem sinusförmig schwingenden Oszillator die primären und sekundären Vorgänge zeitlich unmittelbar miteinander gekoppelt sind, werden alle leitfähigen Medien, beispielsweise auch metallisierte Kunststoffe und Folien, angesprochen. Aufgrund der hohen Empfindlichkeit, insbesondere der nach dem Dämpfungsprinzip arbeitenden Geräte, werden solche Metalldetektoren im Polizei- und Sicherheitsbereich und natürlich auch in der Kampfmittelräumung, in der Archäologie und bei Grabungs- und Planungsarbeiten eingesetzt.

Während Metalle dazu führen, daß bei Annäherung die Amplitude des Oszillators sinkt, hat man festgestellt, daß magnetische Gegenstände zu einer Erhöhung der Amplitude führen. Dieser Umstand führt dazu, daß magnetische Böden und Steine sich durch eine im Gegensatz zu Metall andere Signalrichtung auszeichnen. Der Gesteinsmagnetismus wird im wesentlichen durch Magnetit (Fe₃O₄) hervorgerufen, so daß einzelne magnetische Steine klar von Metall unterschieden werden können.

In Gegenden vulkanischen Ursprungs, wie z.B. der Eifel, im Bereich stark mineralisierter, hochmagnetischer Böden, wie z.B. in Australien, oder auch bei Asphalt erfolgt bei Annäherung des Metalldetektors an den Boden ein den Oszillator entdämpfender Effekt. Dies wird auch als Negativ-Effekt bezeichnet. Daraus ergibt sich, daß das eingestellte Grundsignal des Tons des Metalldetektors mit der Annäherung an den störenden Untergrund abnimmt und schließlich zu Null wird. Gleichzeitig verlagert sich dadurch die Ansprechschwelle des Metalldetektors in Richtung geringerer Empfindlichkeit. Unter solchen Suchbedingungen können nur noch Metallgegenstände aufgespürt werden, deren Signalintensität die störende Wirkung des Untergrundes übertrifft.

Mit den bisher bekannten Geräten ist also ein Suchen im Bereich magnetisch wirkender Böden kaum möglich.

Der Erfindung liegt daher die **Aufgabe** zugrunde, ein Verfahren und einen Metalldetektor der eingangs genannten Art zu schaffen, mit dem es auch im Bereich eines magnetischen Untergrundes und/oder einer Umgebung möglich ist, eine besonders empfindliche Metalldetektion durchzuführen.

Die Lösung dieser Aufgabe erfolgt mit dem im kennzeichnenden Teil des Anspruchs 1 beschriebenen Verfahren. Vorrichtungsmäßig wird die Aufgabe mit den kennzeichnenden Merkmalen des Anspruchs 8 gelöst. Vorteilhafte Weiterbildungen der Erfindung sind in den Unteransprüchen beschrieben.

Nach einem Grundgedanken der Erfindung wird ein insbesondere nach dem Dämpfungsprinzip arbeitender Metalldetektor mit einem Oszillator zur Erzeugung sinusförmiger Wechselfelder verwendet, wobei der Oszillator in einem Arbeitspunkt betrieben wird, bei dem Effekte eines magnetischen Untergrunds und/oder einer Umgebung abgeglichen werden. Durch Einstellung des Arbeitspunktes ist es nämlich möglich, das Schwingungsverhalten des Oszillators so zu verändern, daß ein magnetischer Untergrund entweder einen dämpfenden oder einen erhöhenden Effekt hervorruft. Der Arbeitspunkt muß dann genau auf den Punkt eingestellt werden, bei dem die Effekte abgeglichen oder kompensiert werden. Das Verfahren ist besonders für magnetische Böden eruptiven Ursprungs geeignet.

Bevorzugt wird dazu der Oszillator mit einer Rückkopplung betrieben und zur Einstellung des kompensierenden Arbeitspunktes des Oszillators die Phasenlage der Rückkopplung eingestellt. Durch Beeinflußung der Phasenlage kann dieser Arbeitspunkt besonders einfach und effektiv eingestellt werden.

Eine weitere erfindungsgemäße Einstellung des kompensierenden Arbeitspunktes des Oszillators besteht darin, den DC-Arbeitspunkt des aktiven Elements, insbesondere eines Transistors, zu verändern.

Entsprechend dem Dämpfungsprinzip wird die Amplitude des Oszillators, die durch Annäherung von Metall gedämpft wird, zur Metalldetektion ausgewertet. Grundsätzlich wird auch die Frequenz eines solchen Oszillators durch Annäherung von Metall beeinflußt, so daß auch eine Frequenzauswertung vorgenommen werden kann. Durch geschickte Anpassung der Phasenlage der Rückkopplungsspannung des Oszillators können Störmedien, die eine amplitudenerhöhende Wirkung auf den Oszillator ausüben, kompensiert werden.

Der Arbeitspunkt kann fest auf einen bestimmten Untergrund eingestellt sein, wird jedoch bevorzugt variabel einstellbar sein, so daß für jeden Geländetyp der Arbeitspunkt neu eingestellt werden kann. Besonders günstig ist eine automatische Arbeitspunkteinstellung, durch die die störenden bodenmagnetischen Effekte automatisch abgeglichen werden.

Der Oszillator wird bevorzugt im VLF-Bereich betrieben. Dies ist eine Frequenzbereich von unter 5 bis über 50 kHz. Die Frequenz des kompensierenden Arbeitspunktes wird dabei lediglich um einige Hz verschoben, um die kompensierende Wirkung zu erzielen. Es ist also lediglich eine Verschiebung von wenigen Prozent nötig, um den Bodenabgleich zu erreichen.

Der erfindungsgemäße Metalldetektor zeichnet sich dadurch aus, daß der Oszillator eine phasenschiebende Einrichtung aufweist, die phasenschiebende Einrichtung so ausgelegt und/oder eingestellt ist, daß der Oszillator auf einen Arbeitspunkt eingestellt ist, bei dem der von einem magnetischen Untergrund ausgehende Effekt abgeglichen ist. Mit einem solchen Metalldetektor ist es möglich, die bodenmagnetischen Störeffekte weitestgehend auszuschalten.

Der Oszillator weist bevorzugt einen als Suchspule ausgebildeten LC-Kreis und einen Transistor auf. Dabei ist der Oszillator bevorzugt als Dreipunkt- und insbesondere als Colpitts-Oszillator aufgebaut. Grundsätzlich besteht auch die Möglichkeit als Grundschaltung einen Clapp-, Hartley- oder einen anderen Oszillator einzusetzen, dessen Rückkopplungsphase zwecks kompensierender Wirkung verschoben wird.

In einer bevorzugten Ausführungsform des Oszillators sind mehrere phasenschiebende Einrichtungen vorgesehen. Dies kann günstigerweise mit Hilfe von RC-Gliedern erfolgen. Auch das aktive Element, z.B. ein Transistor, kann als steuerndes Element für die Erzeugung der Phasenverschiebung benutzt werden. Auch andere aktive Bauelemente, wie z.B. IC's, sind hierfür geeignet. Um für unterschiedliche Böden jeweils den optimalen Arbeitspunkt einstellen zu können, weisen die phasenschiebenden Einrichtungen bevorzugt Drehwiderstände auf, mit denen die genaue Phasenverschiebung eingestellt werden kann. Bevorzugt ist ein Drehwiderstand am Emitter des Transistors und/oder in einem Basisspannungsteiler des Transistors und/oder in der Rückkopplung des Oszillators angeordnet.

Nachfolgend wird die Erfindung anhand verschiedener in der Zeichnung dargestellter Ausführungsbeispiele weiter erläutert. Im einzelnen zeigen die schematischen Darstellungen in
- Fig. 1: einen prinzipiellen Aufbau eines Oszillators;
- Fig. 2: ein Ausführungsbeispiel einer Schaltung eines erfindungsgemäßen Metalldetektors;
- Fig. 3: ein zweites Ausführungsbeispiel einer Schaltung eines erfindungsgemäßen Metalldetektors, und
- Fig. 4: eine Darstellung der erfindungsgemäßen Arbeitspunkteinstellung.

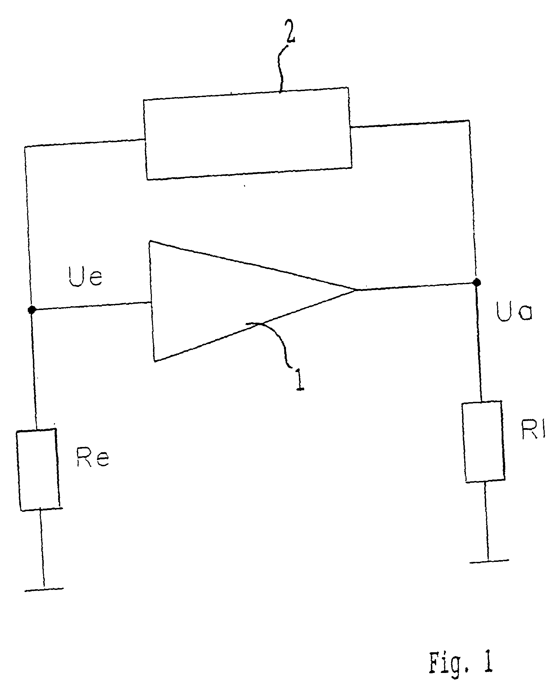

In Fig. 1 ist ein freischwingender Oszillator in Form eines Ersatzschaltbildes dargestellt, der im wesentlichen einen Verstärker 1 und eine Rückkopplung 2, die auch als Mitkopplungsnetzwerk bezeichnet wird, aufweist. Der Verstärker 1 kann mit dem Ausdruck v • Uₑ • e^{jα} und die Rückkopplung 2 kann mit dem Ausdruck k • Uₐ • e^{jβ} beschrieben werden. Um eine dauerhafte Schwingung zu erzeugen, muß die Phase der Ausgangsspannung insgesamt um 360° oder um ein Vielfaches von 360° gedreht werden. Falls der Aktivteil eine Phasenverschiebung von 180° bewirkt, so muß die Rückkopplung 2 eine Phasenverschiebung von ebenfalls 180° bewirken. Dies kann durch die Gleichung α + β = 0, 360° .. n 360° ausgedrückt werden. Die Dämpfungsverluste des Netzwerks werden durch den Verstärkungsfaktor des aktiven Teils ausgeglichen, so daß die Anordnung auf Dauer oszilliert. Dies wird durch die Gleichung k x v = 1 beschrieben.

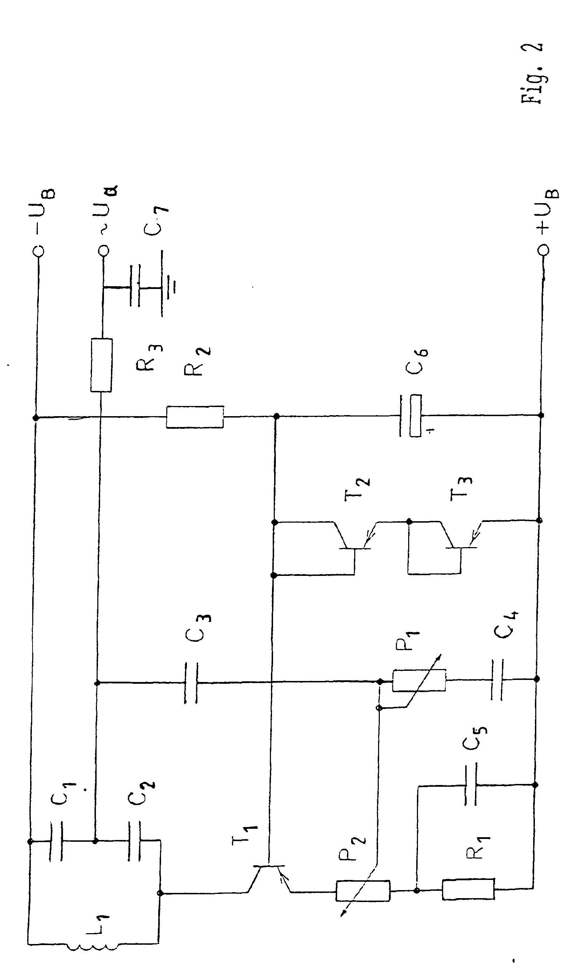

In Fig. 2 ist ein konkretes Ausführungsbeispiel eines erfindungsgemäßen Metalldetektors dargestellt, dessen Schaltungsprinzip auf einen Colpitts-Oszillator zurückgeht, der für die Realisierung des erfindungsgemäßen Verfahrens entsprechend modifiziert ist. Als Betriebsfrequenz sind Frequenzen von unter 5 kHz bis ca. 50 kHz geeignet. Die für den Colpitz-Oszillator charakteristischen Elemente werden vom Schwingkreis mit der Spule L1 und den Kondensatoren C1 und C2 gebildet. Der Transistor T1 ist der aktive Teil, in dessen Kollektorkreis der Schwingkreis mit der Suchspule L1 angeordnet ist. Die äußeren Schaltungsglieder des Oszillators bestehen im wesentlichen aus den Kondensatoren C1, C2, C3, C4 und C5 sowie dem Widerstand R1 und den einstellbaren Widerständen P1 und P2. Der Widerstand R2 bildet in Verbindung mit den Transistoren T2 und T3, die als Dioden geschaltet sind, den stabilisierenden Basisspannungsteiler des Transistors T1. Im vorliegenden Beispiel ist ein PNP-Siliziumtransistor eingesetzt. Der Einsatz von NPN-Transistoren ist ebenfalls möglich. Am Widerstand R3 wird eine Wechselspannung ausgekoppelt, deren Amplitudenhöhe sich abhängig von der Bedämpfung durch Metall verändert. Diese Amplitudenänderung wird dann ausgewertet. Dabei erfolgt bei dem Dämpfungsprinzip nach dem Oszillator die Gleichrichtung und eine Aufbereitung der Ortungssignale für eine Gleichstrombearbeitung.

Die Kondensatoren C1 und C2, die über dem Schwingkreis liegen, bilden einen kapazitiven Spannungsteiler, an dem die Wechselspannung ausgekoppelt wird und an dem auch die Rückkopplung angeschlossen ist, die im wesentlichen die Elemente C3, P1, C4 und P2 aufweist. Über diese Schaltungsglieder wird die Mitkopplung erzeugt, die zur Entdämpfung des Schwingkreises notwendig ist. Phase und Amplitude sind mit den einstellbaren Drehwiderständen P1 und P2 einstellbar. Mit diesen kann der richtige Oszillator-Arbeitspunkt eingestellt werden und eine Kompensation der bodenmagnetischen Störeffekte erreicht werden.

Die phasenverschiebenden Einrichtungen, die im vorliegenden Beispiel durch die Drehwiderstände P1 und P2 realisiert sind, ergeben in Verbindung mit den kapazitiven Spannungsteilern C1, C2, C3 und C4 eine Rückkopplung, auch mitkoppelndes Phasennetzwerks genannt, mit denen eine Kompensation der bodenmagnetischen Effekte erreicht wird. Der Drehwiderstand P1, der auch an einer anderen Position der Schaltung angeordnet werden könnte, verändert vornehmlich die Phase und damit die Schwingungsamplitude. Der Drehwiderstand P2 sorgt dafür, daß die gewünschte, bzw. notwendige Amplitudenhöhe wieder eingestellt werden kann.

Mit Hilfe der beiden Drehwiderstände P1, P2 besteht die Möglichkeit, den bekannten entdämpfenden Effekt des magnetischen Untergrunds so zu verändern, daß aus der Entdämpfung eine Bedämpfung wird. Fixiert man den Arbeitspunkt des Oszillators auf den Punkt, an dem sich die Wirkung des magnetischen Untergrunds gerade umdreht, also auf den Übergang von entdämpfender Wirkung zu bedämpfender Wirkung, so erreicht man einen vollständigen Abgleich des störenden Untergrundeffekts. Die unterschiedlichen Boden- und Gesteinsarten machen es notwendig, daß der kompensierende oder abgleichende Arbeitspunkt des Oszillators veränderlich gestaltet werden kann. Sonst kann man natürlich auch für jedes Suchgebiet eine feste Dimensionierung der Schaltung vornehmen.

Die Wirkung der erfindungsgemäßen Rückkopplung beeinflußt neben der Amplitude auch die Frequenz des Oszillators. Mit der Annäherung von Metall ändert sich durch die Impedanzänderung bzw. durch die Gegeninduktivität, die das Metall bewirkt, in aller Regel die Betriebsfrequenz. Man kann davon ausgehen, daß Amplitude und Frequenz bei allen leitfähigen Medien verändert werden. Bei der erfindungsgemäßen Schaltung bewirkt der magnetische Untergrund zwar nach wie vor eine Veränderung und insbesondere eine Reduzierung der Betriebsfrequenz, die Amplitude bleibt jedoch durch die kompensierende Wirkung der Rückkopplung unverändert.

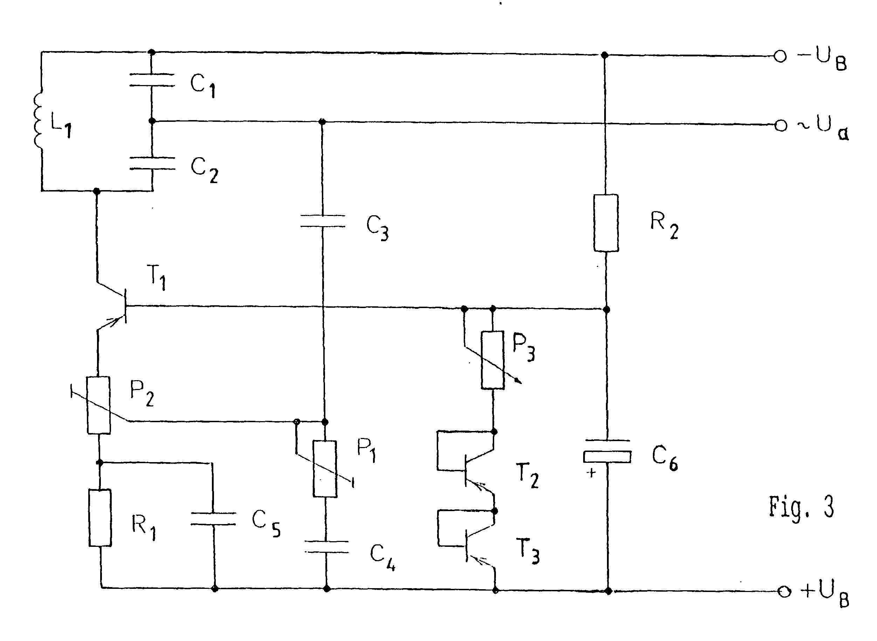

In Fig. 3 ist eine weitere Ausführungsform der Schaltung des erfindungsgemäßen Metalldetektors beschrieben, bei dem die Phasenverschiebung durch die Arbeitspunktveränderung des Transistors T1 erreicht wird. Dazu ist ein weiterer Drehwiderstand P3 im Basisspannungsteiler des Transistors T1 angeordnet. Man kann T1 auch als steuerbaren Widerstand ansehen, der einen Teil der Phasenkette bildet. Wenn auch der Transistor T1 der aktive Teil des Oszillators ist, so geht sein Gleichstrom-Arbeitspunkt sehr stark auf die Rückkopplungsbedingungen ein. Die einstellbaren Widerstände P1, P2 und P3 sind 10-Gang-Feineinsteller, mit denen der Abgleich sehr exakt durchgeführt werden kann. Es ist auch ein Stufenschalter einsetzbar, bei dem fixierte Kompensationswerte für den jeweiligen Boden gewählt und eingestellt werden.

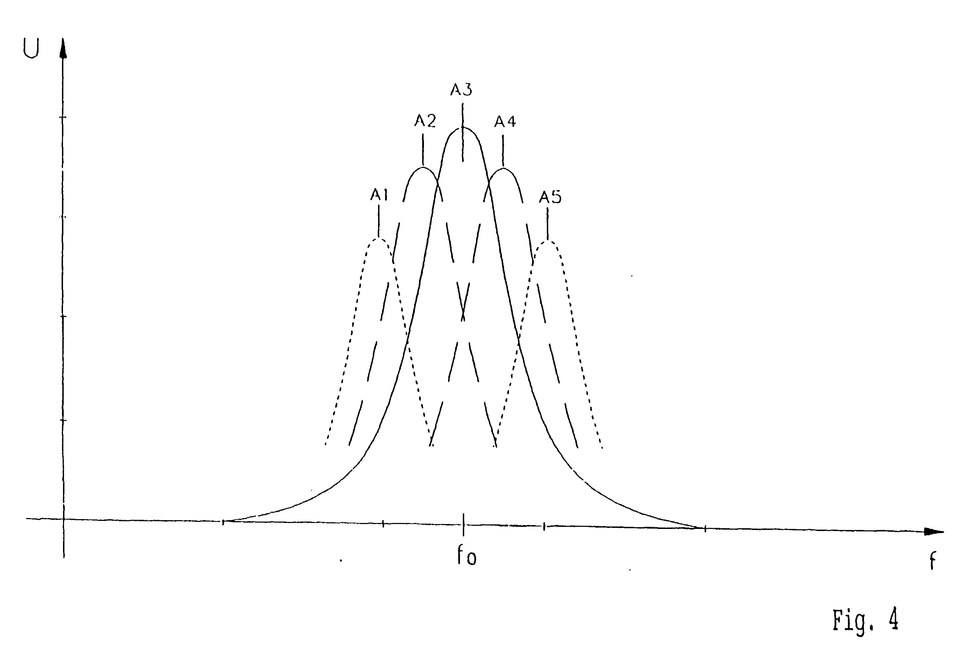

Anhand von Fig. 4 wird die Arbeitspunkteinstellung des Oszillators weiter erläutert. Der Oszillator, der auch als Suchoszillator bezeichnet wird, weist eine Eigenfrequenz f₀ auf, bei der auch der Arbeitspunkt A3 mit der höchsten Amplitude liegt. Außerhalb magnetischer Böden wird in der Regel dieser Arbeitspunkt auf A1 oder A2 eingestellt, also auf einen Wert, bei dem der Oszillator relativ labil durchschwingt. Die kompensierende Wirkung beginnt etwa bei A3, also im Bereich der Mittenfrequenz des Oszillators. Geht man über A3 hinweg, praktisch auf die andere Arbeitsflanke des Oszillators, so erreicht man die gewünschte Intensität der Kompensation. Je nach Suchaufgabe können in geeigneter Weise mehrere Arbeitspunkte des Suchoszillators zur optimalen Lösung des Suchproblems gewählt werden. Dies sind Arbeitspunkte, die auf der rechten oder linken Flanke der Durchlaßkurve liegen können. Der kompensierende Bereich, also der Bereich von A1 bis A5, erstreckt sich über einen Bereich zwischen 100 und 500 Hz.

Das Rückkopplungsnetzwerk in Verbindung mit der Gleichstrom-Arbeitspunkteinstellung bewirkt, daß man die Amplitude des Oszillators auf das Maximum bei f₀ einstellen kann. Vom Maximum ausgehend, kann der kompensierende Arbeitspunkt in Abhängigkeit von der Bodenbeschaffenheit auf der linken oder rechten Flanke liegen.

Die oben beschriebenen Schaltungen sind nur Ausführungsbeispiele für einen erfindungsgemäßen Metalldetektor zur Umsetzung des erfindungsgemäßen Verfahrens. Die Realisierung der vorliegenden Erfindung ist ebenso mit anderen entdämpfenden Netzwerken eines freischwingenden Oszillators möglich. Dabei können auch andere aktive Elemente, wie beispielsweise IC's, FET's, Operationsverstärker usw. eingesetzt werden.

## Patentansprüche

1. Verfahren zum Betrieb eines Metalldetektors,
- bei dem von einem Oszillator sinusförmige Wechselfelder erzeugt und ausgestrahlt werden und eine das Schwingungsverhalten des Oszillators beeinflussende Wirkung von Metallen zur Detektion ausgewertet wird,
- bei dem der Metalldetektor nach dem Dämpfungsprinzip arbeitet und dementsprechend die Amplitude des Oszillators durch Annäherung von Metallgedämpft wird, und
- der einen LC-Schwingkreis verwendende Oszillator mit einer Rückkopplung betrieben wird,
- wobei der Oszillator in einem Arbeitspunkt betrieben wird, bei dem störende Effekte eines magnetischen Untergrundes und der jeweiligen Umgebung, die eine amplitudenerhöhende Wirkung auf den Oszillator ausüben, kompensiert oder eliminiert werden,
- wobei zur Einstellung des Arbeitspunktes des Oszillators die Phasenlage der Rückkopplung eingestellt und/oder verändert wird, und
- wobei der kompensierende Arbeitspunkt des Oszillators in Abhängigkeit vom magnetischen Untergrund und der jeweiligen Umgebung auf einer rechten oder linken Flanke einer Durchlasskurve des Oszillators eingestellt wird.

2. Verfahren nach Anspruch 1,
**dadurch gekennzeichnet,**
**dass** zur Einstellung des Arbeitspunktes, insbesondere eines DC-Arbeitspunktes, des Oszillators der Arbeitspunkt eines den Oszillator ansteuernden Elements, insbesondere eines Transistors, eingestellt wird.

3. Verfahren nach einem der vorhergehenden Ansprüche,
**dadurch gekennzeichnet,**
**dass** eine die Amplitude des Oszillators dämpfende Wirkung von Metall zur Detektion ausgewertet wird.

4. Verfahren nach einem der vorhergehenden Ansprüche.
**dadurch gekennzeichnet,**
**dass** der Arbeitspunkt zur Anpassung an den jeweiligen Untergrund und die jeweilige Umgebung variabel oder auch in Stufen eingestellt werden kann.

5. Verfahren nach einem der vorhergehenden Ansprüche,
**dadurch gekennzeichnet,**
**dass** der Oszillator mit einer Frequenz im VLF-Bereich zwischen ca. 5 kHz und 50 kHz betrieben wird.

6. Verfahren nach einem der vorhergehenden Ansprüche,
**dadurch gekennzeichnet,**
**dass** die Frequenz des Arbeitspunktes um bis zu einige 100 Hz verschoben wird, um die abgleichende Wirkung zu erreichen.

7. Verfahren nach einem der Ansprüche 1 bis 6,
**dadurch gekennzeichnet,**
**dass** die Phasenlage einer Rückkopplungsspannung eingestellt und/oder verändert wird.

8. Metalldetektor nach dem Dämpfungsprinzip, zur Durchführung des Verfahrens nach einem der Ansprüche 1 bis 7,
- mit einem sinusförmig schwingenden Oszillator, der einen mit einer Suchspule ausgebildeten LC-Kreis (L1, C1, C2) aufweist, und entsprechend dem Dämpfungsprinzip die Amplitude des Oszillators durch Annäherung von Metall gedämpft wird,
- wobei der Oszillator eine Rückkopplung mit einer phasenschiebenden Einrichtung (C3, C4, C5, P1, P2, P3, R1, T1) aufweist,
- wobei die phasenschiebenden Einrichtung zur Einstellung einer Phasenlage der Rückkopplungsspannung vorgesehen ist, und
- die phasenschiebende Einrichtung (C3, C4, C5, P1, P2, P3, R1, T1) so ausgelegt und eingestellt und/oder verändert ist, dass der Oszillator durch Einstellung der Phasenlage der Rückkopplungsspannung in einem kompensierenden Arbeitspunkt auf einer rechten oder linken Flanke einer Durchlasskurve des Oszillators betrieben ist, bei dem störende Effekte eines magnetischen Untergrunds und der geweiligen Umgebung, die eine amplitudenerhöhende Wirkung auf den Oszillator ausüben, kompensierbar sind.

9. Metalldetektor nach Anspruch 8,
**dadurch gekennzeichnet,**
**dass** der Oszillator als Drei-Punkt- und insbesondere als Colpitts-Oszillator aufgebaut ist.

10. Metalldetektor nach einem der Ansprüche 8 oder 9,
**dadurch gekennzeichnet,**
**dass** die Rückkopplung mehrere phasenschiebende Einrichtungen aufweist.

11. Metalldetektor nach einem der Ansprüche 8 bis 10,
**dadurch gekennzeichnet,**
**dass** die phasenschiebenden Einrichtungen RC-Glieder und Drehwiderstände (P1, P2, P3) aufweisen.

12. Metalldetektor nach einem der Ansprüche 8 bis 11,
**dadurch gekennzeichnet,**
**dass** ein Transistor (T1) zur Ansteuerung des LC-Kreises (L1, C1, C2) vorgesehen ist,
**dass** ein Drehwiderstand (P2) am Emitter des Transistors (T1) angeordnet ist,
**dass** ein Drehwiderstand (P3) in einem Basisspannungsteiler des Transistors (T1) angeordnet ist, und
**dass** ein Drehwiderstand (P1) in der Rückkopplung des Oszillators angeordnet ist.

13. Metalldetektor nach einem der Ansprüche 8 bis 12,
**dadurch gekennzeichnet,**
**dass** die Drehwiderstände (P1, P2, P3) als 10-Gang-Feineinsteller oder in einstellbaren Widerstandstufen ausgebildet sind.

14. Metalldetektor nach einem der Ansprüche 8 bis 13,
**dadurch gekennzeichnet,**
**dass** zur vollautomatischen Einstellung der phasenschiebenden Einrichtungen, insbesondere der Drehwiderstände (P1, P2, P3), eine Einstelleinrichtung vorgesehen ist.

## Claims

1. Method for operating a metal detector,
- in which an oscillator generates and emits sinusoidal alternating fields and the action of metals influencing the oscillatory behaviour of the oscillator is evaluated for detection purposes,
- in which the metal detector operates in accordance with the damping principle and correspondingly the oscillator amplitude is damped on approaching metal and
- an oscillator using a LC resonant circuit is operated with feedback,
- in which the oscillator is operated in an operating point in which interfering effects of a magnetic ground and the given environment having an amplitude-increasing effect on the oscillator are compensated or eliminated,
- in which for adjusting the oscillator operating point the phase position of the feedback is adjusted and/or modified and
- in which the compensating oscillator operating point is adjusted as a function of the magnetic ground and the particular environment on a right or left side of an oscillator transmission curve.

2. Method according to claim 1,
**characterized in that**
for adjusting the operating point, particularly a DC operating point, of the oscillator, the operating point of an element, particularly a transistor, controlling the oscillator is adjusted.

3. Method according to one of the preceding claims,
**characterized in that**
a metal action damping the oscillator amplitude is evaluated for detection purposes.

4. Method according to one of the preceding claims,
**characterized in that**
the operating point can be adjusted in a variable manner or in stages for adapting to the given ground and environment.

5. Method according to one of the preceding claims,
**characterized in that**
the oscillator is operated at a frequency in the VLF range between approximately 5 and 50 kHz.

6. Method according to one of the preceding claims,
**characterized in that**
the operating point frequency is shifted by up to a few 100 Hz in order to achieve the equalizing action.

7. Method according to one of the claims 1 to 6,
**characterized in that**
the phase position of a feedback voltage is adjusted and/or modified.

8. Metal detector according to the damping principle for per forming the method according to one of the claims 1 to 7,
- with a sinusoidally oscillating oscillator, which has a LC circuit (L1, C1, C2) constructed with a search coil and, in accordance with the damping principle, the oscillator amplitude is damped by the approach of metal,
- in which the oscillator has a feedback with a phase-shifting device (C3, C4, C5, P1, P2, P3, R1, T1),
- in which the phase-shifting device is provided for adjusting a phase position of the feedback voltage and
- the phase-shifting device (C3, C4, C5, P1, P2, P3, R1, T1) is so designed and adjusted and/or modified that the oscillator by adjusting the phase position of the feedback voltage is operated in a compensating operating point on a right or left-hand side of a transmission curve of the oscillator, in which interfering effects of a magnetic ground and the given environment exerting an amplitude-increasing action on the oscillator can be compensated.

9. Metal detector according to claim 8,
**characterized in that**
the oscillator is constructed as a three-point oscillator and in particular as a Colpitts oscillator.

10. Metal detector according to one of the claims 8 or 9,
**characterized in that**
the feedback has several phase-shifting devices.

11. Metal detector according to one of the claims 8 to 10,
**characterized in that**
the phase-shifting devices comprise RC elements and pre-set potentiometers (P1, P2, P3).

12. Metal detector according to one of the claims 8 to 11,
**characterized in that**
a transistor (T1) is provided for controlling the LC circuit (L1, C1, C2),
that a pre-set potentiometer (P2) is located at the emitter of transistor (T1),
that a pre-set potentiometer (P3) is positioned in a base voltage divider of transistor (T1) and
that a pre-set potentiometer (P1) is located in the oscillator feedback.

13. Metal detector according to one of the claims 8 to 12,
**characterized in that**
the pre-set potentiometers (P1, P2, P3) are constructed as 10-step fine adjusters or in adjustable resistance stages.

14. Metal detector according to one of the claims 8 to 13,
**characterized in that**
an adjusting device is provided for the fully automatic adjustment of the phase-shifting devices, particularly the pre-set potentiometers (P1, P2, P3).

## Revendications

1. Procédé d'exploitation d'un détecteur de métaux,
- dans lequel des champs alternatifs sinusoïdaux sont produits et émis par un oscillateur et un effet des métaux sur le comportement oscillatoire de l'oscillateur est exploité pour la détection,
- dans lequel le détecteur de métaux fonctionne selon le principe de l'atténuation et, par conséquent, l'amplitude de l'oscillateur est atténuée quand on approche d'un métal, et
- l'oscillateur utilisant un circuit oscillant LC, fonctionne avec une rétroaction,
- l'oscillateur fonctionne à un point de travail auquel des effets perturbateurs d'un sous-sol magnétique et de l'environnement respectif, qui exercent un effet d'augmentation d'amplitude sur l'oscillateur, sont compensés ou éliminés,
- pour régler le point de travail de l'oscillateur, la position de phase de la rétroaction est ajustée et/ou modifiée, et
- le point de travail compensateur de l'oscillateur est ajusté en fonction du sous-sol magnétique et de l'environnement respectif sur un flanc droit ou gauche d'une courbe de passage de l'oscillateur.

2. Procédé selon la revendication 1,
**caractérisé en ce que**,
pour ajuster le point de travail, en particulier un point de travail en courant continu, de l'oscillateur, on ajuste le point de travail d'un élément commandant l'oscillateur, en particulier un transistor.

3. Procédé selon l'une quelconque des revendications précédentes,
**caractérisé**
**en ce qu'**un effet d'atténuation de l'amplitude de l'oscillateur par un métal est exploité pour la détection.

4. Procédé selon l'une quelconque des revendications précédentes,
**caractérisé en ce que**,
pour s'adapter au sous-sol et à l'environnement respectifs, le point de travail peut être ajusté de manière variable ou par échelons.

5. Procédé selon l'une quelconque des revendications précédentes,
**caractérisé en ce que**
l'oscillateur fonctionne à une fréquence dans le domaine des très basses fréquences, entre environ 5 kHz et 50 kHz.

6. Procédé selon l'une quelconque des revendications précédentes
**caractérisé en ce que**
la fréquence du point de travail est déplacée de jusqu'à quelques 100 Hz pour obtenir l'effet compensateur.

7. Procédé selon l'une quelconque des revendications 1 à 6,
**caractérisé en ce que**
la position de phase d'une tension de rétroaction est ajustée et/ou modifiée.

8. Détecteur de métaux selon le principe de l'atténuation, destiné à appliquer le procédé selon l'une quelconque des revendications 1 à 7,
- avec un oscillateur à oscillations sinusoïdales qui comprend un circuit LC (L1, C1, C2) réalisé avec une bobine détectrice et, conformément au principe d'atténuation, l'amplitude de l'oscillateur étant atténuée quand on approche d'un métal,
- l'oscillateur présentant une rétroaction avec un dispositif de décalage de phase (C3, C4, C5, P1, P2, P3, R1, T1),
- le dispositif de décalage de phase étant prévu pour ajuster une position de phase de la tension de rétroaction,
- le dispositif de décalage de phase (C3, C4, C5, P1, P2, P3, R1, T1) étant conçu et ajusté et/ou modifié de telle sorte que, par ajustement de la position de phase de la tension de rétroaction, l'oscillation fonctionne en un point de travail compensateur sur un flanc droit ou gauche d'une courbe de passage de l'oscillateur auquel des effets perturbateurs d'un sous-sol magnétique et de l'environnement respectif, qui exercent un effet d'augmentation d'amplitude sur l'oscillateur, peuvent être compensés.

9. Détecteur de métaux selon la revendication 8,
**caractérisé en ce que**
l'oscillateur est conformé en oscillateur trois points et, en particulier, en oscillateur Colpitts.

10. Détecteur de métaux selon la revendication 8 ou 9,
**caractérisé en ce que**
la rétroaction comprend plusieurs dispositifs de décalage de phase.

11. Détecteur de métaux selon l'une quelconque des revendications 8 à 10,
**caractérisé en ce que**
les dispositifs de décalage de phase comprennent des éléments RC et des potentiomètres (P1, P2, P3).

12. Détecteur de métaux selon l'une quelconque des revendications 8 à 11,
**caractérisé**
**en ce qu'**un transistor (T1) est prévu pour commander le circuit LC (L1, C1, C2),
**en ce qu'**un potentiomètre (P2) est placé sur l'émetteur du transistor (T1),
**en ce qu'**un potentiomètre (P3) est placé dans un diviseur de tension de base du transistor (T1), et
**en ce qu'**un potentiomètre (P1) est placé sur la rétroaction de l'oscillateur.

13. Détecteur de métaux selon l'une quelconque des revendications 8 à 12,
**caractérisé en ce que**
les potentiomètres (P1, P2, P3) sont conformés en réglages fins à 10 niveaux ou en niveaux de résistance réglables.

14. Détecteur de métaux selon l'une quelconque des revendications 8 à 13,
**caractérisé en ce que**,
pour le réglage entièrement automatique des dispositifs de décalage de phase, en particulier des potentiomètres (P1, P2, P3), il est prévu un dispositif de réglage.
